# EUROPÄISCHE PATENTANMELDUNG

(11) **EP 3 591 739 A1**
(43) Veröffentlichungstag der Anmeldung: **08.01.2020**
(21) Anmeldenummer: 18181413.8
(22) Anmeldetag: 03.07.2018
(51) Int. Cl.: H01M 2/20, H01M 2/34, H01M 10/42

(54) **SICHERHEITSEINRICHTUNG FÜR BATTERIEPACKS MIT POUCHZELLEN DURCH MECHANISCHE STROMUNTERBRECHER**

(71) Anmelder: Hilti Aktiengesellschaft, 9494 Schaan (LI)
(72) Erfinder: Lepiorz, Matthias, 09112 Chemnitz (DE); Stanger, Robert, 87600 Kaufbeuren (DE); Ender, Moses, 9470 Buchs (CH); Ziegler, Bernd, 86830 Schabmünchen (DE); Hauser, Klaus, 86830 Schwabmünchen (DE); Martiny, Nora, 82211 Herrsching-Breitbrunn (DE); Sax, Kathrin, 86937 Scheuring (DE)
(74) Vertreter: Hilti Aktiengesellschaft Corporate Intellectual Property

(57) **Zusammenfassung**

Akkupack (100) mit wenigstens einer Pouchzelle (10), wobei der Akkupack wenigstens einen Stromunterbrecher (20) aufweist, der ausgebildet ist eine Stromentnahme aus der Pouchzelle und/oder aus dem Akkupack zumindest zeitweise zu unterbrechen, wobei der Stromunterbrecher durch ein Aufblähen der wenigstens einen Pouchzelle ausgelöst wird. Der Stromunterbrecher kann als irreversible trennbare Sollbruchstelle (21), als reversibel betätigbarer mechanischer Schalter (22) oder als irreversibel trennende Schmelzsicherung (23) ausgebildet sein.

## Beschreibung

Die vorliegende Erfindung betrifft einen Akkupack mit wenigstens einer Pouchzelle.

Akkupacks sowie Pouchzellen sind grundsätzlich aus dem Stand der Technik bekannt. Ebenfalls aus dem Stand der Technik bekannt ist das Phänomen des sogenannten Swellings, auch Ausdehnen oder Aufblähen genannt. Dies ist problematisch, da es zu einem Aufplatzen einer Außenhülle der Pouchzelle führen kann.

Es ist Aufgabe der vorliegenden Erfindung ein Akkupack zu schaffen, der die Grundlage für eine erhöhte Betriebssicherheit bietet.

Die Erfindung wird dadurch gelöst, dass der Akkupack wenigstens einen Stromunterbrecher aufweist, der ausgebildet ist eine Stromentnahme aus der Pouchzelle und/oder aus dem Akkupack zumindest zeitweise zu unterbrechen, wobei der Stromunterbrecher durch ein Aufblähen der wenigstens einen Pouchzelle ausgelöst wird.

Dier Erfindung schließt die Erkenntnis ein, dass bei Akkupacks des Standes der Technik für elektrische Handwerkzeugmaschinen bislang zylindrische Lithium-Ionen Zellen einer gleichen, definierten Geometrie eingesetzt werden. Um die zunehmenden Leistungsanforderungen akkubetriebener Handwerkzeugmaschinen decken zu können muss entweder der Entladestrom oder die Spannung der Akkupacks erhöht werden. Eine Erhöhung der Akkupackspannung führt zu einem steigenden Aufwand für den Zulassungsprozess (etwa sobald die Schutz-Kleinspannung überschritten wird), für eine Erhöhung des Entladestroms müssen zusätzliche zylindrische Zellen parallelgeschaltet werden, wodurch Größe und Gewicht der Akkupacks steigen. Um hochleistungsfähige Akkupacks leicht und kompakt zu gestalten, können anstelle von zylindrischen Zellen Lithium-Ionen Pouchzellen eingesetzt werden. Dies ist beim Akkupack der vorliegenden Erfindung insbesondere der Fall. Pouchzellen bieten aufgrund ihres inneren Designs einen deutlich geringeren internen Widerstand, wodurch höhere Entladeströme realisiert werden können, ohne den Akkupack zu überhitzen. Zugleich können Lithium-Ionen Pouchzellen in flexiblen Geometrien hergestellt werden, wodurch die Akkupack leicht und kompakt konstruiert werden können.

Durch den erfindungsgemäß vorgesehenen Stromunterbrecher, kann ist ein auf Pouchzellen basierender Akkupack besonders betriebssicher.

Es wurde nämlich erkannt, dass Lithium-Ionen Pouchzellen - im Gegensatz zu zylindrischen Batteriezellen des Standes der Technik - nicht intrinsisch sicher sind. Steigt der Druck innerhalb einer Pouchzelle an (etwa durch Überladung, Kurzschluss oder infolge von Alterung), blähen sich die Zellen auf - was auch als Swelling bezeichnet wird - und können unkontrolliert aufplatzen. Dadurch entsteht ein erhöhtes Sicherheitsrisiko für den Anwender, da durch das unkontrollierte Aufplatzen austretender Elektrolyt durch Kontakt mit einer Zündquelle (z. B. heißer Zellverbinder) entflammen kann. Daneben können die entstehenden mechanischen Kräfte infolge der Ausdehnung die äußere Hülle des Batteriepacks mechanisch beschädigen oder zerstören, wodurch unter Spannung stehende Bereiche des Batteriepacks frei zugänglich gemacht werden. Nach dem Aufplatzen funktionieren Pouch-Zellen weiterhin, weshalb ein thermisches Durchgehen entstehen kann. Diese Nachteile werden durch den erfindungsgemäßen Akkupack vermieden.

In einer besonders bevorzugten Ausgestaltung ist der Stromunterbrecher Teil eines Stromkreises. Vorzugsweise ist der Stromunterbrecher Teil eines Stromkreises, in dem die Pouchzelle selbst elektrisch eingebunden ist. Die Pouchzelle kann in Reihenschaltung in den Stromkreis eingebunden sein. Mehrere in Reihe geschaltete Pouchzellen oder mehrere parallel zueinander geschaltete Pouchzellen können in den Stromkreis eingebunden sein.

Es hat sich als vorteilhaft herausgestellt, wenn der Stromkreis die Pouchzelle oder die Pouchzellen zumindest abschnittsweise umgibt oder begrenzt. So kann der Stromkreis beispielsweise ringförmig um eine Pouchzelle und/oder einen Pouchzellen-Stapel (Stack) angeordnet sein.

In einer besonders bevorzugten Ausgestaltung ist der Stromunterbrecher als trennbare Sollbruchstelle ausgebildet. Vorzugsweise ist eine solche Sollbruchstelle irreversibel trennbar. Ist der als Sollbruchstelle ausgebildete Stromunterbrecher Teil eines Stromkreises, so ist dieser vorzugsweise derart angeordnet, dass ein Ausdehnen der Pouchzelle und/oder der Pouchzellen ein Durchtrennen des Stromkreises bzw. einer elektrischen Leitung des Stromkreises, die die Sollbruchstelle beinhaltet, bewirkt. Durch Unterbrechung des Stromkreises wird ein weiteres Aufblähen bzw. Swelling der Pouchzelle gestoppt. Das Trennen des Stromkreises und/oder der Sollbruchstelle wird durch die bei der Volumenzunahme im Zuge des Swellings entstehenden Ausdehnungskraft bewirkt.

In einer weiteren bevorzugten Ausgestaltung ist der Stromunterbrecher als vorzugsweise reversibel betätigbarer mechanischer Schalter oder Taster ausgebildet. Vorzugsweise erfolgt eine Unterbrechung mechanisch, insbesondere rein mechanisch. Der Schalter oder der Taster sind derart angeordnet, dass eine Volumenzunahme der Pouchzelle und/oder der Pouchzellen den Schalter oder Taster auslöst und so den Stromkreis unterbricht. Somit ist eine Stromentnahme aus der Pouchzelle und/oder aus dem Akkupack verhindert. Des Weiteren wird ein weiteres Aufblähen der Pouchzelle verhindert. Der Schalter oder Taster kann derart eingerichtet sein, dass eine Volumenabnahme der Zelle (Regeneration) zu einem Schließen des Stromkreises führt, wodurch der Akkupack wieder für eine Stromentnahme bereitsteht.

In einer ebenfalls bevorzugten Ausgestaltung ist der Stromunterbrecher als irreversibel trennende Schmelzsicherung ausgebildet. Vorzugsweise ist die Schmelzsicherung derart angeordnet, dass sie durch ein beginnendes Anschwellen zunächst eine Querschnittsverjüngung erfährt, wodurch die Schmelzsicherung bereits bei einem vergleichsweise geringeren Strom auslöst. Bei einer weiteren Ausdehnung der Pouchzelle würde die Schmelzsicherung reißen und somit der Stromkreis unterbrochen werden. Die Ausbildung des Stromunterbrechers als Schmelzsicherung stellt somit eine duale bzw. zweistufige Stromentnahmesicherung für den Akkupack dar. In einer ersten Stufe (leicht geschwollene Pouchzelle) wirkt die Schmelzsicherung somit in ihrer klassischen Funktion. Erst bei einer weiteren Ausdehnung der Pouchzelle erfolgt ein mechanisches Reißen, was wiederum ebenfalls zu einer Stromunterbrechung führt.

Es hat sich als vorteilhaft herausgestellt, wenn der Akkupack eine Mehrzahl gestapelter Pouchzellen aufweist. Jede der Pouchzellen kann zumindest eine vorzugsweise metallische Kontaktfläche aufweisen, über welche sie mit der jeweils benachbarten Pouchzelle elektrisch verbunden ist. Eine Pouchzelle kann zwei vorzugsweise metallische Kontaktflächen aufweisen. Besonders bevorzugt sind genau zwei vorzugsweise metallische Kontaktflächen pro Pouchzelle vorgesehen. Die Mehrzahl gestapelter Pouchzellen können miteinander seriell und/oder parallel verschaltet werden.

Es hat sich als vorteilhaft herausgestellt, wenn der Stromunterbrecher durch das Paar benachbarter Kontaktflächen definiert ist, welches im Vergleich zu den anderen Kontaktflächenpaaren eine geringere Kontaktoberfläche aufweist. Durch eine im Zuge des Aufblähens der Pouchzelle oder der Pouchzellen entstehende Kraft wird eine Unterbrechung desjenigen Paars benachbarter Kontaktflächen bewirkt, die im Vergleich zu den anderen Kontaktflächenpaaren eine geringere Kontaktoberfläche aufweisen. Eine solche vergleichsweise geringere Kontaktoberfläche hält mit anderen Worten lediglich einer geringeren Trennkraft stand als ein Paar mit vergleichsweise größeren Kontaktflächen, durch die mehr Kraft aufgenommen werden kann. Durch das Trennen der benachbarten Kontaktflächen wird ein diese Kontaktflächen einschließender Stromkreis unterbrochen, wodurch eine Stromentnahme aus der Pouchzelle und/oder dem Akkupack in diesem Fall irreversibel unterbrochen wird.

Der Stromunterbrecher kann durch das Paar benachbarter Kontaktflächen definiert sein, die im Vergleich zu den anderen Kontaktflächenpaaren durch eine Verbindung mit geringerer Kontaktkraft elektrisch und/oder mechanisch miteinander verbunden sind. Eine Ausdehnung der Pouchzelle und/oder der Pouchzellen bewirkt in diesem Fall eine Unterbrechung des Kontaktes zwischen den benachbarten Kontaktflächen, wodurch eine Stromentnahme aus der Pouchzelle und/oder dem Akkupack unterbrochen wird. Eine Unterbrechung aufgrund geringerer Kontaktkraft zweier benachbarter Kontaktflächen ist vorzugsweise reversibel, das heißt durch eine Selbstregeneration der Zellen (Volumenverringerung) kann ein solcher Kontakt zweier benachbarter Kontaktflächen wiederhergestellt werden und so ein Stromkreis geschlossen werden.

Die Erfindung wird ebenfalls gelöst durch eine elektrische Handwerkzeugmaschine mit einem Akkupack der vorbeschriebenen Art. Der Akkupack des Systems aus Handwerkzeugmaschine und Akkupack kann mit Bezug auf die vorbeschriebenen Merkmale vorteilhaft weitergebildet sein.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: ein erstes bevorzugtes Ausführungsbeispiel eines erfindungsgemäßen Akkupacks mit Stromunterbecher;
- Fig. 2: ein zweites bevorzugtes Ausführungsbeispiel eines erfindungsgemäßen Akkupacks mit Stromunterbecher;
- Fig. 3: ein drittes bevorzugtes Ausführungsbeispiel eines erfindungsgemäßen Akkupacks mit Stromunterbecher;
- Fig. 4: ein viertes bevorzugtes Ausführungsbeispiel eines erfindungsgemäßen Akkupacks mit Stromunterbecher; und
- Fig. 5: ein fünftes bevorzugtes Ausführungsbeispiel eines erfindungsgemäßen Akkupacks mit Stromunterbecher.

### Ausführungsbeispiele:

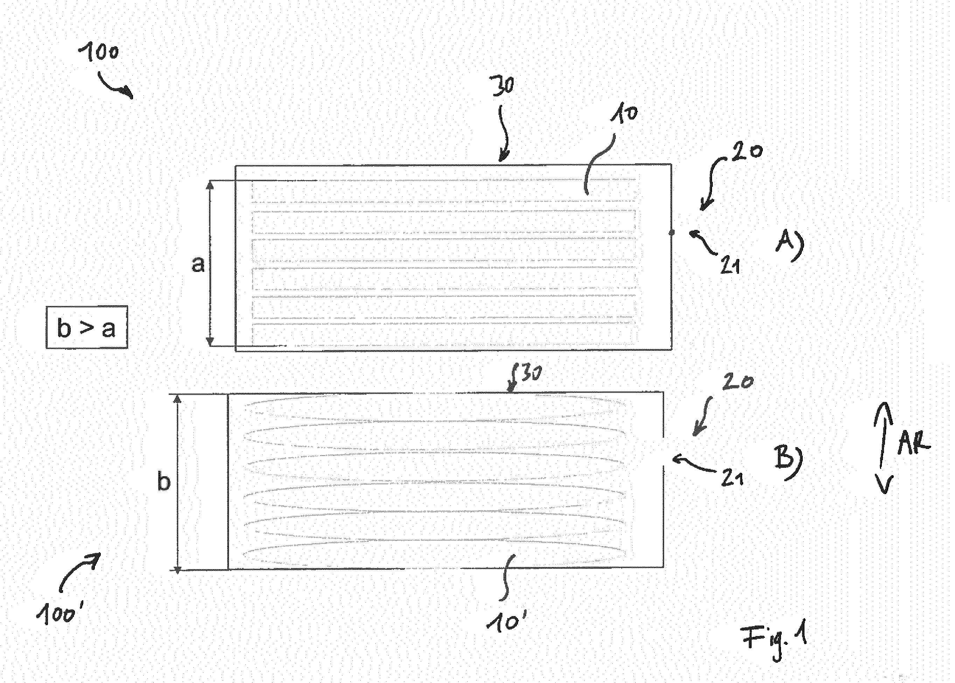

Ein erstes bevorzugtes Ausführungsbeispiel eines erfindungsgemäßen Akkupacks 100 ist in Fig. 1 dargestellt. Der Akkupack 100 weist im vorliegend dargestellten Ausführungsbeispiel sechs identische Pouchzellen 10 auf, die gestapelt sind. In Fig. 1A sind die Pouchzellen 10, in neuem, das heißt nicht ausgedehntem Zustand dargestellt. Fig. 1B zeigt wiederum den Akkupack 100 mit gealterten, aufgeblähten Zellen 10'. Wie der Zusammenschau der Fig. 1A und 1B zu entnehmen ist, ist eine Stapelhöhe a beim neuwertigen Akkupack geringer als eine Stapelhöhe b des gealterten Akkupacks 100' in Fig. 1B.

Es sei bemerkt, dass in sämtlichen Figuren 1 bis 5 ein neuwertiger Akkupack jeweils mit dem Bezugszeichen 100, ein gealterter Akkupack jeweils mit dem Bezugszeichen 100' bezeichnet wird, wobei AR die Aufblährichtung bezeichnet. Gleichermaßen bezeichnet das Bezugszeichen 10 in den Figuren 1 bis 5 eine neuwertige, nicht aufgeblähte Pouchzelle. Eine gealterte, aufgeblähte Pouchzelle ist jeweils mit dem Bezugszeichen 10' bezeichnet.

Erfindungsgemäß weist der Akkupack 100 einen Stromunterbrecher 20 auf, der ausgebildet ist, eine Stromentnahme aus dem Akkupack 100 zumindest zeitweise zu unterbrechen. Der Stromunterbrecher 20 wird durch ein Aufblähen der Pouchzelle 10 ausgelöst. Im Ausführungsbeispiel der Fig. 1 ist der Stromunterbrecher 20 Teil eines Stromkreises 30, der den in Fig. 1 gezeigten Stapel von Pouchzellen 10 ringförmig umgibt. Im Ausführungsbeispiel der Fig. 1 ist der Stromunterbrecher 20 als irreversibel trennbare Sollbruchstelle 21 in der Leitung, die Teil des Stromkreises 30 ist, ausgebildet. Die Sollbruchstelle 21 ist beispielhaft in Fig. 1A mit einem Punkt bezeichnet und ist in Fig. 1A unversehrt, das heißt der Stromkreis 30 ist elektrisch und mechanisch geschlossen.

Durch ein Aufblähen der Pouchzelle 10' - dies ist in Fig. 1B dargestellt - wird der als Sollbruchstelle 21 ausgebildete Stromunterbrecher 20 getrennt, was zu einem Öffnen des Stromkreises 30 führt. In diesem Fall ist eine Stromentnahme aus dem Akkupack 100 irreversibel unterbrochen.

Es sei bemerkt, dass der Stromkreis 30 in Fig. 1 lediglich schematisch dargestellt ist, das heißt eine elektrische Einbindung der Pouchzelle 10 in den Stromkreis 30 ist nicht explizit dargestellt. Vorzugsweise ist ein hier nicht dargestellter elektrischer Kontakt des Akkupacks, der eine Schnittstelle zu einer elektrischen Handwerkzeugmaschine bildet, Teil des Stromkreises 30.

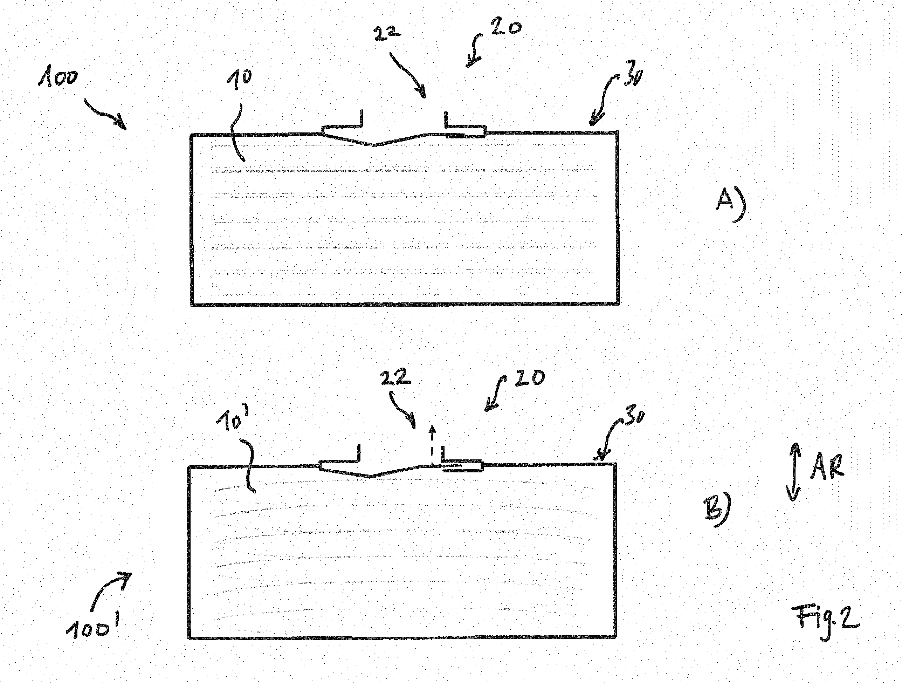

Ein zweites bevorzugtes Ausführungsbeispiel eines erfindungsgemäßen Akkupacks 100 ist in Fig. 2 dargestellt. Im hier gezeigten Ausführungsbeispiel ist der Stromunterbrecher als reversibel betätigbarer mechanischer Schalter ausgebildet. Der mechanische Schalter ist in Reihenschaltung in den Stromkreis 30 eingebunden. Hier nicht erkennbar ist auch die Pouchzelle 10 in den Stromkreis 30 elektrisch eingebunden. Fig. 2A zeigt den mechanischen Schalter 22 in geschlossenem Zustand, das heißt eine Stromentnahme aus dem Akkupack 100 bzw. aus den Pouchzellen 10 kann erfolgen.

Wie der Fig. 2B entnommen werden kann, sind die Pouchzellen 10' nunmehr gealtert bzw. aufgebläht dargestellt. Dadurch ist der Schalter 22 nunmehr in einer Trennstellung befindlich, wodurch der Stromkreis 30 in dessen Leitung der als mechanischer Schalter 22 bereitgestellte Stromunterbrecher eingebunden ist, unterbrochen.

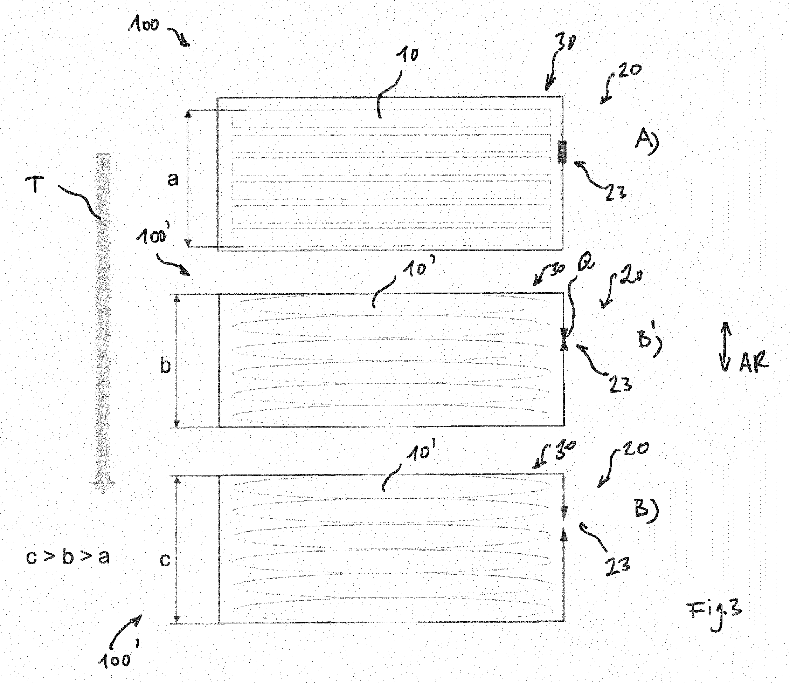

Ein drittes bevorzugtes Ausführungsbeispiel ist in Fig. 3 dargestellt. Der dicke Pfeil auf der linken Seite der Figuren deutet einen Alterungsprozess T an, wobei die Pfeilrichtung ein zunehmendes Alter bzw. eine zunehmende Aufblähung der Pouchzellen 10 darstellt.

Wie der Fig. 3A entnommen werden kann, ist der als Schmelzsicherung 23 ausgebildete Stromunterbrecher 20 in den Stromkreis 30 des Akkupacks 100 eingebunden.

In Fig. 3B' sind die Pouchzellen 10' etwas angeschwollen. Das heißt, die Höhe b des Zellenstapels in Fig. 3B' ist größer als die Stapelhöhe a des Stapels bestehend aus neuen Pouchzellen 10 in Fig. 3A.

Wie der Fig. 3B' entnommen werden kann, hat die Schmelzsicherung 23 zunächst eine Querschnittsverjüngung Q erfahren. Durch diese Querschnittsverjüngung Q würde die Schmelzsicherung bei einem im Vergleich zu Fig. 3A gezeigten Zustand bei einem geringeren Strom auslösen, das heißt schmelzen. Insofern stellt die Schmelzsicherung 23 mit Querschnittsverjüngung Q bereits einen Stromunterbrechermechanismus 20 dar, da dieser durch ein Aufblähen der Pouchzelle 10 ausgelöst wird.

Bei einer weiteren Ausdehnung der Pouchzellen 10' (dies ist in Fig. 3B dargestellt), reißt die Schmelzsicherung 23 mechanisch, wodurch der Stromkreis 30 unterbrochen wird. Die in Fig. 3B gezeigte Unterbrechung ist irreversibel. Eine Stapelhöhe c der Pouchzellen 10' ist, in Aufblährichtung AR, größer als die Höhe b des Zellenstapels in Fig. 3B'

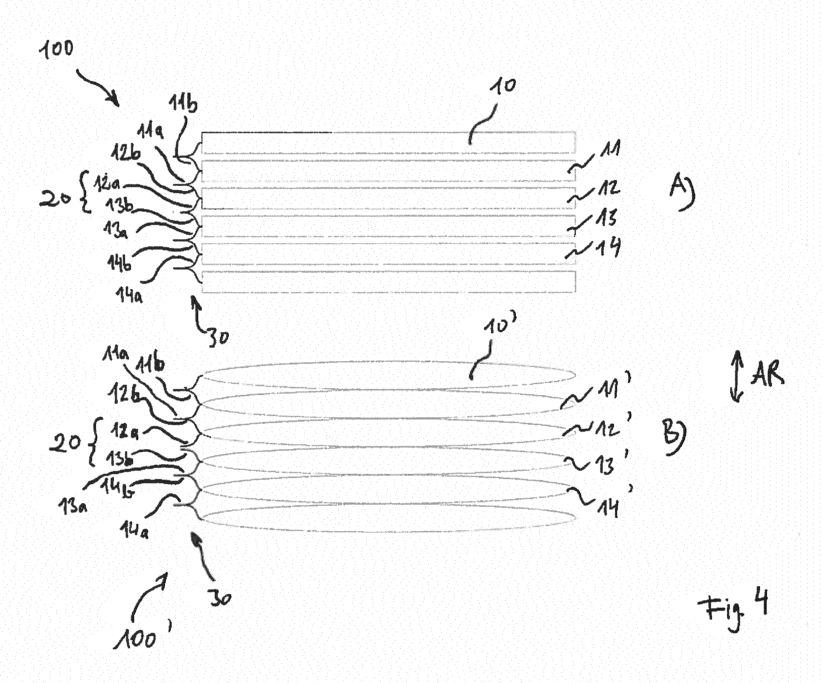

Ein viertes bevorzugtes Ausführungsbeispiel eines erfindungsgemäßen Akkupacks 100 ist in Fig. 4 dargestellt. Der Akkupack 100 der Fig. 4 weist eine Mehrzahl gestapelter Pouchzellen 10, 11, 12, 13, 14 auf. Jede der Pouchzellen weist zumindest eine hier beispielhaft metallische Kontaktfläche auf, die in seitlicher Richtung von der jeweiligen Pouchzelle abragt. So weist die Pouchzelle 12 beispielsweise eine erste Kontaktfläche 12a und eine zweite Kontaktfläche 12b auf. Die Pouchzelle 11 weist eine erste Kontaktfläche 11a und eine zweite Kontaktfläche 12b auf. Die einander benachbarten Pouchzellen 11 und 12 sind derart verbunden, dass die zweite Kontaktfahne 12b mit der Pouchzelle 12 mit der ersten Kontaktfahne 11a der Pouchzelle 11 elektrisch und mechanisch verbunden ist. Ebenso ist die Pouchzelle 12 über ihre erste Kontaktfläche 12a mit einer zweiten Kontaktfläche 13b der Pouchzelle 13 elektrisch und mechanisch verbunden.

Wie der Fig. 4 entnommen werden kann, weist das Paar benachbarter Kontaktflächen 12a, 13b im Vergleich zu anderen Kontaktflächenpaaren, wie beispielsweise 13a, 14b oder 12b, 11a eine geringere Kontaktoberfläche auf. Eine im Zuge der Ausdehnung der Zellen 11', 12', 13', 14' bedingte Kraft führt zu einer Trennung ebenjenes Kontaktpaares 12a, 13b, mit der vergleichsweise geringen Kontaktoberfläche zueinander, da diese Kontaktpaarung eine geringere Kraft aufnehmen kann als benachbarte Kontaktpaarungen. Wie der Fig. 4A und B entnommen werden kann, definieren die benachbarten Kontaktfahnen 12a und 13b jeweils den Stromunterbrecher 20, der Teil eines Stromkreises 30 ist.

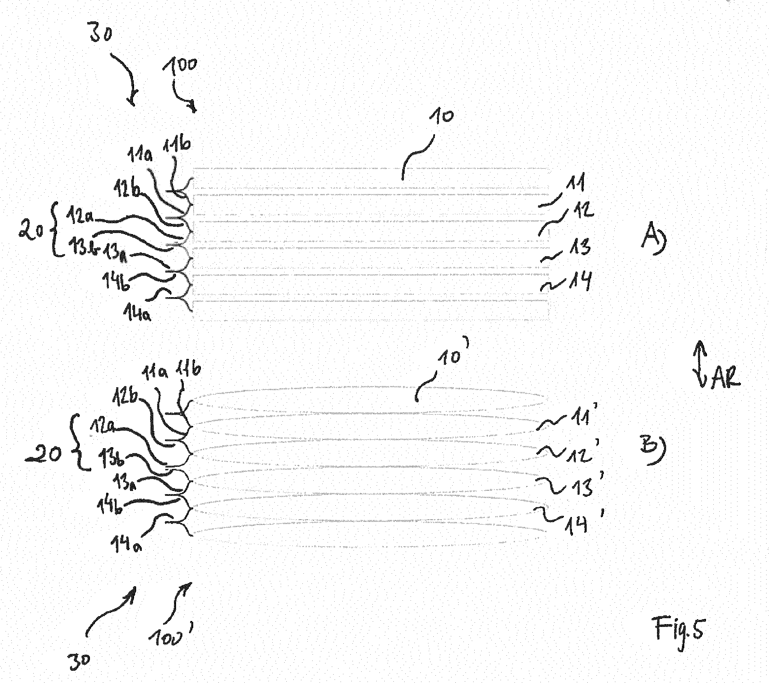

Im Gegensatz zum Ausführungsbeispiel der Fig. 4, bei dem das Paar benachbarter Kontaktflächen mit der geringsten gemeinsamen Kontaktoberfläche den Stromunterbrecher definiert, wird beim Ausführungsbeispiel der Fig. 5 der Stromunterbrecher durch das Paar benachbarter Kontaktflächen 12a, 13b definiert, die im Vergleich zu den anderen Kontaktflächenpaaren 13a, 14b sowie 12b, 11a durch eine Verbindung mit geringerer Kontaktkraft elektrisch und/oder mechanisch miteinander verbunden sind. Ein Ausdehnen der Pouchzellen 11', 12', 13', 14' (vgl. Fig. 5B) führt zuallererst zu einem Trennen der benachbarten Kontaktflächen 12a, 13b, die sich durch die geringste Kontaktkraft zueinander auszeichnen. Auch in diesem Ausführungsbeispiel wird durch den durch die Kontaktflächen 12a, 13b definierten Stromunterbrecher 20 der Stromkreis 30 getrennt, wodurch eine Stromentnahme aus dem Akkupack 100 unterbrochen wird.

### Bezugszeichenliste

- 10, 11, 12, 13, 14: Pouchzelle (neu)
- 10', 11', 12', 13', 14': Pouchzelle (aufgebläht)
- 11a, 11b; 12a, 12b; 13a, 13b; 14a, 14b: Kontaktflächen
- 20: Stromunterbrecher
- 21: Sollbruchstelle
- 22: Schalter
- 23: Schmelzsicherung
- 30: Stromkreis
- 100: Akkupack

- AR: Aufblährichtung
- Q: Querschnittsverjüngung
- T: Alterung

## Patentansprüche

1. Akkupack (100) mit wenigstens einer Pouchzelle (10),
**dadurch gekennzeichnet, dass** der Akkupack (100) wenigstens einen Stromunterbrecher (20) aufweist, der ausgebildet ist eine Stromentnahme aus der Pouchzelle (10) und/oder aus dem Akkupack (100) zumindest zeitweise zu unterbrechen, wobei der Stromunterbrecher (20) durch ein Aufblähen der Pouchzelle (10) ausgelöst wird.

2. Akkupack (100) nach Anspruch 1,
**dadurch gekennzeichnet, dass** der Stromunterbrecher (20) Teil eines Stromkreises (30) ist, in den die Pouchzelle (10) selbst elektrisch eingebunden ist, vorzugsweise in Reihenschaltung.

3. Akkupack (100) nach Anspruch 2,
**dadurch gekennzeichnet, dass** der Stromkreis (30) die die Pouchzelle (10) zumindest abschnittsweise umgibt oder begrenzt.

4. Akkupack (100) nach einem der Ansprüche 1 bis 3,
**dadurch gekennzeichnet, dass** der Stromunterbrecher (20) als vorzugsweise irreversible trennbare Sollbruchstelle (21) ausgebildet ist.

5. Akkupack (100) nach einem der Ansprüche 1 bis 3,
**dadurch gekennzeichnet, dass** der Stromunterbrecher (20) als vorzugsweise reversibel betätigbarer mechanischer Schalter (22) oder Taster ausgebildet ist.

6. Akkupack (100) nach einem der Ansprüche 1 bis 3,
**dadurch gekennzeichnet, dass** der Stromunterbrecher (20) als irreversibel trennende Schmelzsicherung (23) ausgebildet ist.

7. Akkupack (100) nach Anspruch 6,
**dadurch gekennzeichnet, dass** die Schmelzsicherung (23) derart angeordnet ist, dass sie durch ein beginnendes Anschwellen zunächst eine Querschnittsverjüngung (Q) erfährt, wodurch die Schmelzsicherung (23) bereits bei vergleichsweise geringerem Strom auslöst.

8. Akkupack (100) nach einem der vorangehenden Ansprüche,
**dadurch gekennzeichnet, dass** der Akkupack (100) eine Mehrzahl gestapelter Pouchzellen (11, 12, 13, 14) aufweist, wobei jeder der Pouchzellen zumindest eine vorzugsweise metallische Kontaktfläche (11a, 11b; 12a, 12b; 13a, 13b; 14a, 14b) aufweist über welche sie mit der jeweils benachbarten Pouchzelle elektrisch verbunden ist.

9. Akkupack (100) nach Anspruch 9,
**dadurch gekennzeichnet, dass** der Stromunterbrecher (20) durch das Paar benachbarter Kontaktflächen (12a, 13b) definiert ist, welches im Vergleich zu den anderen Kontaktflächenpaaren (13a, 14b; 12b, 11a) eine geringere Kontaktoberfläche aufweisen.

10. Akkupack (100) nach Anspruch 9,
**dadurch gekennzeichnet, dass** der Stromunterbrecher (20) durch das Paar benachbarten Kontaktflächen (12a, 13b) definiert ist, die im Vergleich zu den anderen Kontaktflächenpaaren (13a, 14b; 12b, 11a) durch eine Verbindung mit geringerer Kontaktkraft elektrisch miteinander verbunden sind.

11. Elektrische Handwerkzeugmaschine mit einem Akkupack (100) nach einem der vorangehenden Ansprüche.
